# FASCICULE DE BREVET EUROPEEN

(11) **EP 1 937 523 B1**
(45) Date de publication et mention de la délivrance du brevet: **19.05.2010**
(21) Numéro de dépôt: 06792180.9
(22) Date de dépôt: 20.09.2006
(51) Int. Cl.: B60S 1/32

(54) **BRAS D'ENTRAÎNEMENT D'ESSUIE-GLACE COMPORTANT UN TRONÇON DÉFORMABLE ÉLASTIQUEMENT RIGIDIFIÉ EN FLEXION DANS UN PLAN PAR DES ÉLÉMENTS DE RENFORT INEXTENSIBLES**
SCHEIBENWISCHERANTRIEBSARM MIT EINEM DURCH NICHT VERLÄNGERBARE VERSTÄRKUNGSELEMENTE IN EINER EBENE BIEGEVERSTEIFTEN ELASTISCH VERFORMBAREN ABSCHNITT
WINDSCREEN WIPER DRIVE ARM COMPRISING AN ELASTICALLY DEFORMABLE SECTION FLEXURALLY RIGIDIFIED IN A PLANE BY INEXTENSIBLE REINFORCING ELEMENTS

(30) Priorité: 21.09.2005 FR 0509613
(43) Date de publication de la demande: 02.07.2008
(73) Titulaire: VALEO SYSTEMES D'ESSUYAGE, 78321 La Verriere (FR)
(72) Inventeur: ESPINASSE Phillippe, 63114 Coudes (FR)
(74) Mandataire: Rosolen-Delarue, Katell
(86) Numéro de dépôt international: PCT/EP2006/009146
(87) Numéro de publication internationale: WO 2007/033822

(56) Documents cités:
- FR-A- 2 515 121
- US-B1- 6 212 730
- PATENT ABSTRACTS OF JAPAN vol. 2000, no. 09, 13 octobre 2000 (2000-10-13) -& JP 2000 168505 A (ASMO CO LTD), 20 juin 2000 (2000-06-20)

## Description

L'invention concerne un bras d'entraînement d'un balai d'essuie-glace qui comporte un tronçon intermédiaire d'orientation principale longitudinale qui est déformable élastiquement dans un plan longitudinal vertical.

L'invention comporte plus particulièrement un bras d'entraînement d'un balai d'essuie-glace qui comporte :
- un tronçon d'extrémité arrière qui est destiné à être fixé à un arbre d'entraînement du bras dans un mouvement de balayage alterné autour d'un axe globalement vertical ;
- un tronçon d'extrémité avant libre qui est apte à porter le balai d'essuie-glace ;
- un tronçon intermédiaire d'orientation principale longitudinale qui est déformable élastiquement dans un plan longitudinal vertical et qui relie le tronçon arrière au tronçon avant ; et
- un raidisseur pour rigidifier le tronçon intermédiaire en flexion dans un plan horizontal.

Le document FR-A-2.515.121 décrit un tel bras d'entraînement pour lequel l'âme centrale du tronçon intermédiaire est réalisée en matériau composite à base de fibres de verre, et pour lequel une gaine extérieure entoure la totalité de l'âme centrale et est réalisée en matériau composite à base de fibres de carbone qui sont orientées à plus ou moins 45° par rapport à la direction longitudinale.

L'âme centrale est ainsi déformable élastiquement en flexion, tandis que la gaine permet d'augmenter la rigidité du bras en torsion autour de son axe principal longitudinal, en comparaison avec un bras conventionnel dont la structure est métallique.

La flexibilité du bras dans un plan longitudinal vertical permet notamment au bras d'exercer un effort de rappel élastique vertical pour plaquer le balai d'essuie-glace contre une surface vitrée en vis-à-vis, mais elle permet aussi à un opérateur de remplacer le balai d'essuie-glace en saisissant le tronçon d'extrémité avant libre du bras d'entraînement pour l'éloigner de la surface vitrée.

Cependant, lorsque le bras d'entraînement est monté sur un véhicule, et qu'il est entraîné en balayage alterné, le frottement du balai d'essuie-glace contre la vitre exerce un effort transversal horizontal sur l'extrémité libre du balai d'essuie-glace. Cet effort est susceptible de faire fléchir le tronçon intermédiaire dans un plan horizontal. La qualité de l'essuyage risque alors d'en pâtir.

Pour éviter ce désagrément, il est connu de conformer le bras d'entraînement de manière à rigidifier le tronçon intermédiaire en flexion dans un plan horizontal, tandis que le tronçon intermédiaire conserve une grande flexibilité dans un plan longitudinal vertical. A cet effet, il est connu de concevoir le tronçon intermédiaire avec une largeur transversale "faible" par rapport à son épaisseur.

Cependant, un tel bras d'entraînement n'est pas encore suffisamment rigide en flexion dans un plan horizontal. De plus, pour améliorer encore la rigidité du bras d'entraînement, il faut élargir encore plus le bras, ce qui est onéreux et peu esthétique.

Pour remédier à ce problème, l'invention propose un bras d'entraînement du type décrit précédemment, caractérisé en ce que le raidisseur comporte au moins un premier élément longitudinal souple qui est fixé le long d'une première face latérale longitudinale du tronçon intermédiaire de manière que, lorsqu'un effort transversal est appliqué au tronçon intermédiaire dans un premier sens, une contrainte longitudinale est exercée sur le premier élément de renfort, le premier élément de renfort étant indéformable longitudinalement dans le sens de la contrainte de manière à limiter la flexion du tronçon intermédiaire dans un plan horizontal dans le premier sens.

Selon d'autres caractéristiques de l'invention :
- le raidisseur comporte un deuxième élément longitudinal souple qui est fixé le long d'une deuxième face latérale longitudinale du tronçon intermédiaire de manière que, lorsqu'un effort transversal est appliqué au tronçon intermédiaire dans un deuxième sens, une contrainte longitudinale est exercée sur le deuxième élément de renfort, le deuxième élément de renfort étant indéformable longitudinalement dans le sens de la contrainte de manière à limiter la flexion du tronçon intermédiaire dans un plan horizontal dans un deuxième sens ;
- l'effort transversal exerce une tension de traction sur l'élément de renfort, et en ce que l'élément de renfort est longitudinalement inextensible ;
- l'effort transversal exerce une contrainte de compression sur l'élément de renfort, et en ce que l'élément de renfort est longitudinalement incompressible ;
- les deux éléments du raidisseur sont agencés dans le même plan horizontal que la fibre neutre du tronçon intermédiaire ;
- chaque élément de renfort comporte au moins un brin longitudinal de renfort qui est constitué de fibres unidirectionnelles ;
- les brins de renfort comportent des fibres de carbone dites à "haut module d'élasticité" qui sont orientées longitudinalement ;
- le tronçon intermédiaire comporte une âme longitudinale déformable élastiquement en flexion dans toutes les directions ;
- l'âme est recouverte d'au moins une gaine superficielle qui est apte à augmenter la raideur en torsion du tronçon intermédiaire autour de son axe principal longitudinal ;
- la gaine superficielle recouvre les éléments de renfort latéraux ;
- le ou les éléments longitudinaux du raidisseur sont fixés à la surface extérieure de la gaine superficielle.

D'autres caractéristiques et avantages apparaîtront au cours de la description détaillée qui va suivre pour la compréhension de laquelle on se reportera aux dessins annexés parmi lesquels :
- la figure 1 est une vue en perspective qui représente un bras d'entraînement comportant un tronçon intermédiaire flexible ;
- la figure 2 est une vue en perspective qui représente l'âme du tronçon flexible du bras d'entraînement de la figure 1.
- la figure 3 est une vue similaire à celle de la figure 2 qui représente l'âme du tronçon flexible de la figure 2 qui est recouvert d'une gaine ;
- la figure 4 est une vue similaire à celle de la figure 3 dans laquelle le tronçon flexible comporte des éléments de renfort réalisés selon l'invention pour raidir le bras d'entraînement en flexion dans un plan horizontal ;
- la figure 5 est une vue de dessus qui représente un bras d'entraînement comportant un tronçon flexible qui est réalisé selon l'état de la technique ;
- la figure 6 est une vue de dessus qui représente un bras d'entraînement comportant un tronçon flexible qui est réalisé selon les enseignements de l'invention.

Pour la suite de la description, on adoptera à titre non limitatif une orientation longitudinale, verticale et transversale indiquée par le trièdre L,V,T des figures.

La direction longitudinale est orientée d'arrière en avant selon le sens de la flèche "L" des figures.

Par la suite, des éléments identiques, analogues ou similaires seront indiqués par des mêmes numéros de référence.

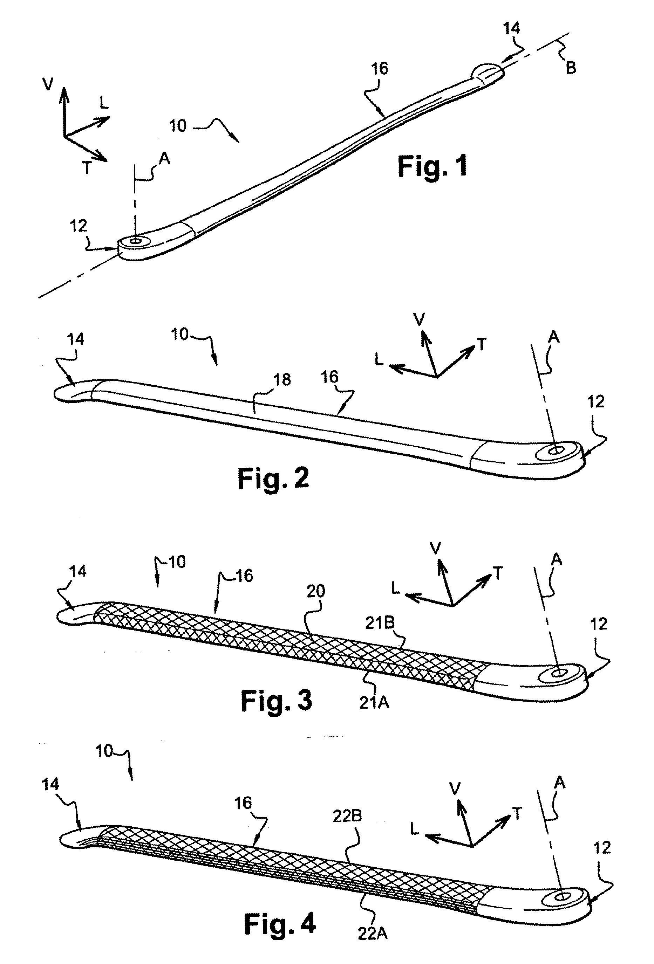

On a représenté à la figure 1 un bras 10 d'entraînement d'un balai d'essuie-glace (non représenté) en balayage alterné par rapport à une surface vitrée (non représentée) globalement horizontale, autour d'un axe "A" vertical.

Le bras d'entraînement 10 a un axe principal "B" d'orientation longitudinale et il comporte un tronçon d'extrémité arrière 12 par l'intermédiaire duquel le bras d'entraînement 10 est fixé à un arbre d'entraînement (non représenté) du bras 10 en balayage alterné autour de l'axe vertical "A". Le bras d'entraînement 10 comporte un tronçon d'extrémité avant libre 14 qui est conformé de manière à permettre le montage du balai d'essuie-glace sur le bras d'entraînement 10.

Le bras d'entraînement 10 comporte aussi un tronçon intermédiaire 16 d'axe "B" d'orientation principale longitudinale qui relie le tronçon arrière 12 au tronçon avant 14. Ce tronçon intermédiaire 16 est déformable élastiquement en flexion dans un plan longitudinal vertical.

Comme on peut le voir plus en détail aux figures 2 à 4, le tronçon intermédiaire est ici réalisé en matériau composite.

Comme représenté à la figure 2, il comporte notamment une âme 18 d'orientation principale longitudinale qui est constituée d'un matériau déformable élastiquement en flexion dans toutes les directions. L'âme 18 est par exemple constituée de résine époxy contenant des fibres de verre qui sont courtes par rapport à la longueur longitudinale du tronçon intermédiaire 16. Les fibres de verre sont orientées aléatoirement de manière que le matériau constitutif de l'âme 18 soit isotrope. L'âme 18 comporte par exemple 10% de fibres de verre en volume. Une telle âme a un module d'élasticité, ou module d'Young, de faible valeur, par exemple de l'ordre de 10 GPa.

L'âme 18 est conformée de manière à favoriser la déformation élastique du tronçon intermédiaire 16 en flexion dans un plan longitudinal vertical et à réduire la déformation élastique du tronçon intermédiaire 16 en flexion dans un plan transversal longitudinal. Ainsi, l'âme 18 a une largeur transversale qui est supérieure à son épaisseur verticale.

Comme représenté à la figure 3, l'âme 18 est recouverte d'une gaine superficielle 20 qui est apte à augmenter la raideur du tronçon intermédiaire 16 en torsion autour de son axe principal longitudinal. La gaine 20 est ici constituée d'un tissu qui comporte des fibres longues qui s'étendent hélicoïdalement tout le long du tronçon intermédiaire 16 autour l'axe principal longitudinal. Les fibres sont orientées de manière à former un angle de plus ou moins 45° par rapport à l'orientation longitudinale "L". Le tissu 20 est ainsi drapé tout autour de l'âme 18. Il s'agit par exemple de tissu de verre tissé avec des fibres de verre.

Le tissu 20 est choisi de manière à ne pas rigidifier sensiblement le tronçon intermédiaire 16 en flexion.

On obtient ainsi un bras d'entraînement 10 réalisé selon l'état de la technique.

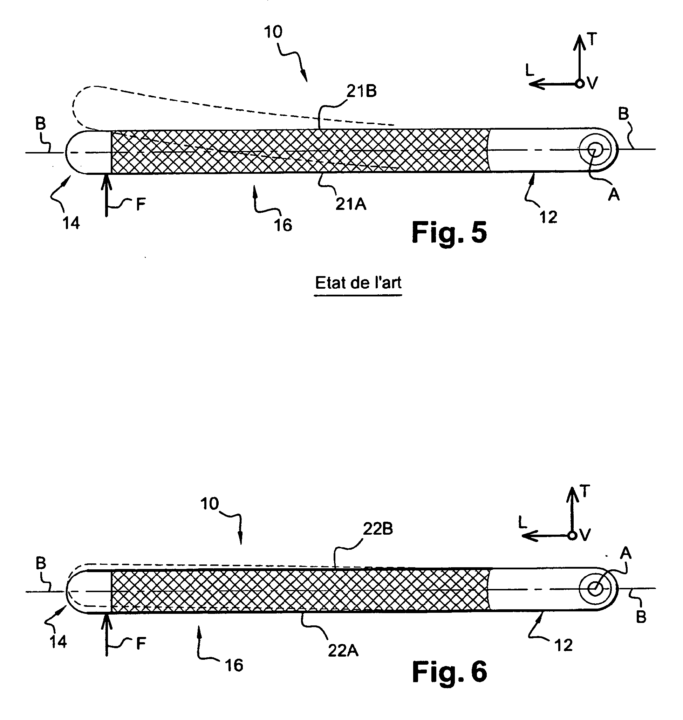

Comme illustré à la figure 5, lorsqu'un effort transversal "F" est appliqué au tronçon avant 14 de ce bras d'entraînement 10, le tronçon intermédiaire 16 fléchit dans un plan horizontal, comme représenté en traits interrompus. La fibre neutre, c'est-à-dire le matériau qui est situé au voisinage de l'axe longitudinal principal central du tronçon intermédiaire 16, fléchit sans changer de longueur et sans subir de contrainte de traction ni de compression. En revanche, le matériau constitutif d'une première face latérale 21 A, représentée en bas à la figure 5, est soumis à une tension de traction qui l'allonge, tandis que le matériau constitutif de la deuxième face latérale 21B, représentée en haut à la figure 5, est soumis à un effort longitudinal de compression qui le raccourci.

Selon les enseignements de l'invention, pour résoudre ce problème, le bras d'entraînement 10 comporte un raidisseur pour augmenter la raideur du tronçon intermédiaire 16 en flexion dans un plan horizontal.

Comme représenté à la figure 4, le raidisseur comporte un premier brin longitudinal 22A et un deuxième brin longitudinal 22B de renfort qui sont souples. Chacun des brins de renfort 22A, 22B est fixé le long d'une face latérale 21A, 21B, longitudinale verticale, associée du tronçon intermédiaire 16. Chaque brin de renfort 22A, 22B est tendu le long de la face latérale 21A, 21 B associée du tronçon intermédiaire 16. Avantageusement, le brin de renfort 22A, 22B est fixé de tout son long contre la face latérale 21A, 21B associée, par exemple par collage avec de la résine.

Chaque brin de renfort 22A, 22B est sensiblement inextensible en traction longitudinale, c'est-à-dire que chaque brin a un module d'élasticité longitudinale très élevé par rapport au module d'élasticité de l'âme 18, par exemple supérieur à 400 GPa. Ainsi, si un effort de traction est appliqué à un brin de renfort 22A, 22B, ce dernier ne s'allongera pas, ou seulement de manière négligeable. Les brins de renfort 22A, 22B sont ici constitués par des fibres unidirectionnelles longitudinales, par exemple par des fibres de carbone dites à "haut module d'élasticité".

Les deux brins de renfort 22A, 22B sont fixés dans le même plan horizontal que la fibre neutre "B" du tronçon intermédiaire 16.

Les deux brins de renfort 22A, 22B, sont ici agencés contre la surface extérieure de la gaine superficielle 20. Selon une variante non représentée, les brins de renfort 22A, 22B, sont agencés contre l'âme 18 du tronçon intermédiaire 16, puis ils sont recouverts par le tissu superficielle 20.

Comme on peut le voir à la figure 6, lorsque le bras d'entraînement 10 est équipé de brins de renfort 22A, 22B réalisés selon les enseignements de l'invention, l'effort transversal "F" induit une tension de traction dans le premier brin de renfort 22A associé à la première face. Or, le premier brin de renfort 22A est inextensible, c'est-à-dire qu'il ne s'allonge pas. Ainsi, le tronçon intermédiaire 16 ne fléchit pas dans le plan horizontal, ou seulement de manière négligeable, la déformation étant contenue par le premier brin de renfort 22A.

Si l'effort transversal "F" est appliqué dans l'autre sens, c'est le deuxième brin de renfort 22B qui est sollicité en traction. De la même manière, le tronçon intermédiaire 16 ne fléchit pas, ou seulement de manière négligeable.

En revanche, lorsqu'on applique un effort vertical (non représenté) sur le tronçon d'extrémité avant 14, les brins de renfort 22A, 22B ne sont pas sollicités en traction, car ils sont agencés dans le même plan horizontal que la fibre neutre "B" du tronçon intermédiaire 16. Les brins de renfort 22A, 22B étant souples en flexion, ils ne rigidifient donc pas le tronçon intermédiaire 16 en flexion dans un plan longitudinal vertical.

Selon un autre mode de réalisation qui est combinable avec le mode de réalisation décrit précédemment, les brins de renfort 22A, 22B souples sont constitués d'un matériau longitudinalement incompressible de manière à empêcher la flexion du tronçon intermédiaire 16 dans un plan horizontal.

Dans ce cas, comme représenté à la figure 6, l'effort "F" appliqué transversalement induit une contrainte de compression dans le deuxième brin de renfort 22B. Or, le brin de renfort 22B étant incompressible, il empêche le tronçon intermédiaire 16 de fléchir dans le plan horizontal.

Selon encore un variante non représentée de l'invention, le raidisseur ne comporte qu'un unique élément longitudinal 22 qui est associé à une seule des faces latérales 21A, 21B du tronçon intermédiaire 16. Cet élément longitudinal 22 est souple, longitudinalement incompressible et longitudinalement inextensible. Ainsi, ce seul élément longitudinal 22 suffit à empêcher le tronçon intermédiaire 16 de fléchir dans un premier sens car il est incompressible, et dans un deuxième sens car il est inextensible.

L'invention a été décrite en référence à un bras composite composé d'une âme 18, d'une gaine 20 et de brins de renfort latéraux 22A, 22B, chaque matériau remplissant ainsi une unique fonction distincte. L'âme 18, confère au tronçon intermédiaire 18 sa flexibilité, la gaine 20 confère au tronçon intermédiaire 16 sa rigidité en torsion, et les brins de renfort 22A, 22B confère au tronçon intermédiaire sa rigidité en flexion dans un plan horizontal.

Cependant, l'invention est aussi applicable à un bras d'entraînement 10 dans lequel le tronçon intermédiaire 16 a des propriétés mécaniques similaires mais une structure différente.

## Revendications

1. Bras d'entraînement (10) d'un balai d'essuie-glace qui comporte :
- un tronçon d'extrémité arrière (12) qui est destiné à être fixé à un arbre d'entraînement du bras (10) dans un mouvement de balayage alterné autour d'un axe globalement vertical (A) ;
- un tronçon d'extrémité avant libre (14) qui est apte à porter le balai d'essuie-glace ;
- un tronçon intermédiaire (16) d'orientation principale longitudinale (B) qui est déformable élastiquement dans un plan longitudinal vertical et qui relie le tronçon arrière (12) au tronçon avant (14) ; et
- un raidisseur (22A, 22B) pour rigidifier le tronçon intermédiaire (16) en flexion dans un plan horizontal,
**caractérisé en ce que** le raidisseur comporte au moins un premier élément longitudinal (22A) souple qui est fixé le long d'une première face latérale (21A) longitudinale du tronçon intermédiaire (16) de manière que, lorsqu'un effort transversal (F) est appliqué au tronçon intermédiaire (16) dans un premier sens, une contrainte longitudinale est exercée sur le premier élément de renfort (22A),
et **en ce que** le premier élément de renfort (22A) est indéformable longitudinalement dans le sens de la contrainte de manière à limiter la flexion du tronçon intermédiaire (16) dans un plan horizontal dans le premier sens.

2. Bras d'entraînement (10) selon la revendication précédente, **caractérisé en ce que** le raidisseur comporte un deuxième élément longitudinal souple (22B) qui est fixé le long d'une deuxième face latérale longitudinale (21B) du tronçon intermédiaire de manière que, lorsqu'un effort transversal (F) est appliqué au tronçon intermédiaire (16) dans un deuxième sens, une contrainte longitudinale est exercée sur le deuxième élément de renfort (22B),
et **en ce que** le deuxième élément de renfort (22B) est indéformable longitudinalement dans le sens de la contrainte de manière à limiter la flexion du tronçon intermédiaire (16) dans un plan horizontal dans un deuxième sens.

3. Bras d'entraînement (10) selon l'une quelconque des revendications précédentes, **caractérisé en ce que** l'effort transversal (F) exerce une tension de traction sur l'élément de renfort (22A, 22B), et **en ce que** l'élément de renfort (22A, 22B) est longitudinalement inextensible.

4. Bras d'entraînement (10) selon l'une quelconque des revendications précédentes, **caractérisé en ce que** l'effort transversal (F) exerce une contrainte de compression sur l'élément de renfort (22A, 22B), et **en ce que** l'élément de renfort (22A, 22B) est longitudinalement incompressible.

5. Bras d'entraînement (10) selon la revendication précédente, **caractérisé en ce que** les deux éléments (22A, 22B) du raidisseur sont agencés dans le même plan horizontal que la fibre neutre du tronçon intermédiaire (16).

6. Bras d'entraînement (10) selon l'une quelconque des revendications précédentes, **caractérisé en ce que** chaque élément de renfort comporte au moins un brin longitudinal (22A, 22B) de renfort qui est constitué de fibres unidirectionnelles.

7. Bras d'entraînement (10) selon la revendication précédente, **caractérisé en ce que** les brins de renfort (22A, 22B) comportent des fibres de carbone dites à "haut module d'élasticité" qui sont orientées longitudinalement.

8. Bras d'entraînement (10) selon l'une quelconque des revendications précédentes, **caractérisé en ce que** le tronçon intermédiaire (16) comporte une âme (18) longitudinale déformable élastiquement en flexion dans toutes les directions.

9. Bras d'entraînement (10) selon la revendication précédente, **caractérisé en ce que** l'âme (18) est recouverte d'au moins une gaine superficielle (20) qui est apte à augmenter la raideur en torsion du tronçon intermédiaire autour de son axe principal longitudinal (B).

10. Bras d'entraînement (10) selon la revendication précédente, **caractérisé en ce que** la gaine superficielle (20) recouvre les éléments de renfort latéraux (22A, 22B).

11. Bras d'entraînement (10) selon la revendication 9, **caractérisé en ce que** le ou les éléments longitudinaux du raidisseur (22A, 22B) sont fixés à la surface extérieure de la gaine superficielle (20).

## Claims

1. A windscreen wiper drive arm (10) which includes:
- a rear end section (12) intended to be fixed to an arm (10) driving shaft in an alternate wiping motion about a substantially vertical axis (A);
- a free front end section (14) able to carry the windscreen wiper;
- an intermediate section (16) having a main longitudinal orientation (B) which is elastically deformable in a vertical longitudinal plane and which connects the rear section (12) to the front section (14); and
- a stiffener (22A, 22B) for rigidifying the intermediate section (16) when flexed in a horizontal plane,
**characterised in that** the stiffener includes at least a first flexible longitudinal element (22A) which is flexed along a first longitudinal side face (21A) of the intermediate section 16 so that, when a transverse stress (F) is applied onto the intermediate section (16) in a first direction, a longitudinal constraint is exerted on the first reinforcing element (22A),
and **in that** the first reinforcing element (22A) is longitudinally undeformable in the direction of the constraint, so as to limit the flexion of the intermediate section (16) in a horizontal plane in the first direction.

2. A drive arm (10) according to the previous claim, **characterised in that** the stiffener includes a second flexible longitudinal element (22B) which is fixed along a second longitudinal side face (21B) of the intermediate section so that, when a transverse stress (F) is applied onto the intermediate section (16) in a second direction, a longitudinal constraint is exerted on the second reinforcing element (22B),
and **in that** the second reinforcing element (22B) is longitudinally undeformable in the direction of the constraint so as to limit the flexion of the intermediate section (16) in a horizontal plane in a second direction.

3. A drive arm (10) according to any one of the preceding claims, **characterised in that** the transverse stress (F) exerts a tension stress on the reinforcing element (22A, 22B) and **in that** the reinforcing element (22A, 22B) is longitudinally inextensible.

4. A drive arm (10) according to any one of the preceding claims, **characterised in that** the transverse stress (F) exerts a compression constraint onto the reinforcing element (22A, 22B) and **in that** the reinforcing element (22A, 22B) is longitudinally incompressible.

5. A drive arm (10) according to the preceding claim, **characterised in that** both elements (22A, 22B) of the stiffener are arranged in the same horizontal plane as the pitch line of the intermediate section (16).

6. A drive arm (10) according to any one of the preceding claims, **characterised in that** each reinforcing element includes at least one longitudinal reinforcing strand (22A, 22B) which is composed of unidirectional fibres.

7. A drive arm (10) according to the preceding claim, **characterised in that** the reinforcing strands (22A, 22B) include so-called "high elasticity modulus" carbon fibres which are longitudinally oriented.

8. A drive arm (10) according to any one of the preceding claims, **characterised in that** the intermediate section (16) includes a longitudinal core (18) elastically deformable in flexion in any direction.

9. A drive arm (10) according to the preceding claim, **characterised in that** the core (18) is covered with at least one surface sheath (20) which is able to increase the torsional stiffness of the intermediate section about the longitudinal main axis (B) thereof.

10. A drive arm (10) according to the preceding claim, **characterised in that** the surface sheath (20) covers the side reinforcing elements (22A, 22B).

11. A drive arm (10) according to claim 9, **characterised in that** the longitudinal element or elements (22A, 22B) of the stiffener is/are fixed to the external surface of the surface sheath (20).

## Patentansprüche

1. Scheibenwischerantriebsarm (10), der folgende Teile umfaßt:
- einen hinteren Endabschnitt (12), der dazu bestimmt ist, an einer Welle für den Antrieb des Arms (10) in einer abwechselnden Wischbewegung um eine insgesamt senkrechte Achse (A) befestigt zu werden;
- einen freien vorderen Endabschnitt (14), der geeignet ist, den Scheibenwischer zu tragen;
- einen Zwischenabschnitt (16) mit hauptsächlicher Längsausrichtung (B), der in einer senkrechten Längsebene elastisch verformbar ist, und der den hinteren Abschnitt (12) mit dem vorderen Abschnitt (14) verbindet;
- eine Versteifung (22A, 22B) zur Biegeversteifung des Zwischenabschnitts (16) in einer horizontalen Ebene,
**dadurch gekennzeichnet, daß** die Versteifung mindestens ein erstes elastisches Längselement (22A) umfaßt, das entlang einer ersten Seitenfläche (21A) des Zwischenabschnitts (16) befestigt ist, so daß, wenn eine Querkraft (F) auf den Zwischenabschnitt (16) in einer ersten Richtung ausgeübt wird, eine Längsbelastung auf das erste Verstärkungselement (22A) wirkt,
und **dadurch**, daß das erste Verstärkungselement (22A) längs in Richtung der Belastung unverformbar ist, so daß die Biegung des Zwischenabschnitts (16) in einer horizontalen Ebene in der ersten Richtung begrenzt wird.

2. Scheibenwischerantriebsarm (10) nach vorstehendem Anspruch, **dadurch gekennzeichnet, daß** das Versteifungsglied ein zweites elastisches Längselement (22B) umfaßt, das entlang einer zweiten Längsseitenfläche (21B) des Zwischenabschnitts befestigt ist, so daß, wenn eine Querkraft (F) auf den Zwischenabschnitt (16) in einer zweiten Richtung ausgeübt wird, eine Längsbelastung auf das zweite Verstärkungselement (22B) wirkt,
und **dadurch**, daß das zweite Verstärkungselement (22B) längs in Richtung der Belastung unverformbar ist, so daß die Biegung des Zwischenabschnitts (16) in einer horizontalen Ebene in einer zweiten Richtung begrenzt wird.

3. Scheibenwischerantriebsarm (10) nach einem beliebigen der vorstehenden Ansprüche, **dadurch gekennzeichnet, daß** die Querkraft (F) eine Zugspannung auf das Verstärkungselement (22A, 22B) ausübt, und **dadurch**, daß das Verstärkungselement (22A, 22B) nicht verlängerbar ist.

4. Scheibenwischerantriebsarm (10) nach einem beliebigen der vorstehenden Ansprüche, **dadurch gekennzeichnet, daß** die Querkraft (F) eine Kompressionsspannung auf das Verstärkungselement (22A, 22B) ausübt, und **dadurch**, daß das Verstärkungselement (22A, 22B) in Längsrichtung nicht komprimierbar ist.

5. Scheibenwischerantriebsarm (10) nach vorstehendem Anspruch, **dadurch gekennzeichnet, daß** die beiden Elemente (22A, 22B) des Versteifungsglieds in der gleichen horizontalen Ebene gestaltet sind, wie die neutrale Faser des Zwischenabschnitts (16).

6. Scheibenwischerantriebsarm (10) nach einem beliebigen der vorstehenden Ansprüche, **dadurch gekennzeichnet, daß** jedes Verstärkungselement mindestens ein Längsteil (22A, 22B) zur Verstärkung umfaßt, das aus in einer Richtung verlaufenden Fasern besteht.

7. Scheibenwischerantriebsarm (10) nach vorstehendem Anspruch, **dadurch gekennzeichnet, daß** die Verstärkungsteile (22A, 22B) Kohlenstoffasern mit sogenanntem "hohem Elastizitätsmodul" umfassen, die längs ausgerichtet sind.

8. Scheibenwischerantriebsarm (10) nach einem beliebigen der vorstehenden Ansprüche, **dadurch gekennzeichnet, daß** der Zwischenabschnitt (16) ein längs verlaufendes Innenteil (18) umfaßt, das in allen Richtungen biegeverformbar ist.

9. Scheibenwischerantriebsarm (10) nach vorstehendem Anspruch, **dadurch gekennzeichnet, daß** das Innenteil (18) mit mindestens einer Oberflächenhülle (20) überzogen ist, die geeignet ist, die Steife bei Verdrehung des Zwischenabschnitts um seine Hauptlängsachse (B) zu erhöhen.

10. Scheibenwischerantriebsarm (10) nach vorstehendem Anspruch, **dadurch gekennzeichnet, daß** die Oberflächenhülle (20) die seitlichen Verstärkungselemente (22A, 22B) überdeckt.

11. Scheibenwischerantriebsarm (10) nach Anspruch 9, **dadurch gekennzeichnet, daß** das oder die Längselemente der Versteifung (22A, 22B) an der Außenfläche der Oberflächenhülle (20) befestigt ist/sind.
